# EUROPÄISCHE PATENTSCHRIFT

(11) **EP 2 126 387 B1**
(45) Veröffentlichungstag und Bekanntmachung des Hinweises auf die Patenterteilung: **13.03.2013**
(21) Anmeldenummer: 08701339.7
(22) Anmeldetag: 09.01.2008
(51) Int. Cl.: F16C 33/60, F16C 19/38, F16C 19/50, F16C 11/04

(54) **WÄLZLAGER MIT DREHWINKELBEGRENZER**
ROLLING BEARING HAVING A ROTATION ANGLE LIMITER
PALIER À ROULEAUX AVEC LIMITEUR D'ANGLE DE ROTATION

(30) Priorität: 26.01.2007 DE 102007003970
(43) Veröffentlichungstag der Anmeldung: 02.12.2009
(73) Patentinhaber: Schaeffler Technologies AG & Co. KG, 91074 Herzogenaurach (DE)
(72) Erfinder: STÖLZLE, Jürgen, 91056 Erlangen (DE)
(86) Internationale Anmeldenummer: PCT/EP2008/050174
(87) Internationale Veröffentlichungsnummer: WO 2008/090017

(56) Entgegenhaltungen:
- WO-A-01/45627
- DE-A1- 10 141 113
- FR-A1- 2 884 893
- JP-A- 3 020 114

## Beschreibung

### Gebiet der Erfindung

Die Erfindung betrifft ein Wälzlager, insbesondere eine Drehverbindung, mit zumindest einem äußeren Lagerring und einem inneren Lagerring, zwischen denen eine Vielzahl von Wälzkörpern abrollen, wobei innerhalb des Wälzlagers ein Anschlagmittel zur Begrenzung von dessen Drehwinkel angeordnet ist.

### Hintergrund der Erfindung

Wälzlager-Drehverbindungen sind seit längerem allgemein bekannt und werden gemäß dem Fachbuch "Die Wälzlagerpraxis", Vereinigte Fachverlage GmbH, Mainz 1995 als Schwenklager für die Abstützung von Baggern, Kränen oder im Fahrzeugbau für Gelenkbusse bzw. Straßenbahnen eingesetzt, d.h., in Einsatzgebieten, bei denen bei begrenztem Einbauraum hohe Belastungen auftreten und die eine hohe Betriebssicherheit verlangen. Diese Drehverbindungen können Axialkräfte, Radialkräfte und Kippmomente aufnehmen und werden darüber hinaus auch in der Medizintechnik, im Roboterbau oder in der Wehrtechnik eingestzt. Die Schwenklager werden dabei als Vierpunktlager ausgebildet, die insbesondere zur Aufnahme von Kippkräften bei kleinem Querschnitt gut geeignet sind. Gelenke von Industrierobotern und andere Lagerstellen, die die Tragfähigkeit und die Steifigkeit von Kugellagern überfordern, werden dagegen zumeist mit Kreuzrollenlagern ausgerüstet, die einen Kranz von Rollen mit annähernd quadratischem Querschnitt aufweisen, die abwechselnd mit versetzter Achse auf den Laufbahnen abrollen. Derartige Schwenklager sind beispielhaft in der FR 2 549 174 A und in der DE 1 525 140 A1 vorbeschrieben.

Im medizinischen Bereich werden solche Drehverbindungen zumeist in sogenannten Deckenstativen eingesetzt, bei denen, wie beispielsweise aus der DE 36 27 517 A1 hervorgeht, an einem an der Raumdecke befestigten Basisteil mehrere verschiedene medizinische Geräte tragende Schwenkarme verschwenkbar befestigt sind. In diesem Zusammenhang ist es allgemein bekannt, dass wegen der Übertragung von Daten anhand elektrischer Leitungen oder wegen der Übertragung von Flüssigkeiten/Gase durch Schläuche die Winkelverstellung zwischen den gegeneinander verschwenkbaren Teilen begrenzt werden muss. Dies ist erforderlich, um eine Beschädigung der Drehverbindung durch ein Verdrehen der elektrischen Leitung oder der Schläuche zu verhindern. So ist beispielsweise aus der FR 2 693 102 A ein Deckenstativ bekannt, dessen Figur 2 erkennen lässt, dass die Zuleitungen für medizinische Gase oder Fluide mittels Rohrleitungen durch Verdrillen nicht beschädigt werden dürfen.

Ein weiteres Deckenstativ für einen Operationssaal ist aus der FR 2 884 893 A bekannt. Bei diesem Deckenstativ ist zwischen einem Oberteil und einem Unterteil ein Wälzlager, insbesondere eine Drehverbindung, angeordnet ist, das aus einem inneren Lagerring und einem äußeren Lagerring und zwischen diesen Lagerringen auf zugehörigen Laufbahnen abrollenden Wälzkörpern besteht. Zur Begrenzung des Drehwinkels zwischen Ober- und Unterteil des Schwenkarms sind darüber hinaus Anschlagmittel vorgesehen, die an der Anschlusskonstruktion der Drehverbindung angeordnet und in Form eines zwischen zwei nasenartigen Endanschlägen angeordneten Anschlagstiftes ausgebildet sind.

Darüber hinaus ist durch die WO 01/45627 A1 ein Deckenstativ für ein Operationssaalsystem bekannt, bei dem an einer zentralen Deckensäule neben den Naben für andere medizinische Gerätschaften auch eine Monitornabe drehbar gelagert ist, an der zwei Schwenkarmanordnungen zur Halterung von zwei Monitoren schwenkbar befestigt sind. Zu diesem Zweck weist die Monitornabe zwei sich um 180° gegenüberliegend angeordnete untere Schwenkgelenke auf, auf die zwei jeweils an den Enden der Schwenkarmanordnungen angeordnete obere Schwenkgelenke aufgesetzt werden. Das untere Schwenkgelenk wird dabei jeweils mit dem oberen Schwenkgelenk über eine Schraube verbunden, wobei die Verschwenkbarkeit beider Schwenkgelenke zueinander jeweils über ein Axialnadellager gewährleistet wird, welches in eine Ringschulter im unteren Schwenkgelenk eingesetzt ist und auf dessen oberer Druckscheibe das obere Schwenkgelenk mit seiner unteren Ringfläche aufliegt. Zur Vermeidung von Beschädigungen des durch Gelenkanordnung durchgeführten Kabels beim Verschwenken der Monitore weisen die Schwenkgelenke darüber hinaus eine Schwenkbegrenzung zueinander auf, die durch eine in der unteren Ringfläche im oberen Schwenkgelenk angeordnete bogenförmige Nut und einen neben der Ringschulter im unteren Schwenkgelenk angeordneten und in die Nut im oberen Schwenkgelenk eingreifenden bogenförmigen Anschlag gebildet wird.

Nachteilig bei allen vorbeschriebenen Drehverbindungen für Deckenstative ist jedoch, dass deren mechanische Drehwinkelbegrenzer keine Verdrehung der Lagerringe über 360° hinaus erlauben, was aber zur uneingeschränkten Handhabbarkeit des Deckenstatives unbedingt erforderlich ist.

Durch die JP 03020114 A ist schließlich noch ein Wälzlager bekannt, das einen äußeren und einen inneren Lagerring sowie zusätzlich einen zwischen diesen Lagerringen angeordneten mittleren Lagerring aufweist, wobei zwischen dem äußeren und dem mittleren Lagerring sowie zwischen dem mittleren und dem inneren Lagerring auf zugehörigen Laufbahnen jeweils eine Vielzahl von Wälzkörpern abrollen. Als Drehwinkelbegrenzung des Wälzlagers sind alle drei Lagerringe an einer Axialseite mit Radialstegen ausgebildet, die in einer Ausgangsstellung einseitig aneinander anliegen. Nach einer Drehung des äußeren Lagerrings um 360° kommt dessen Radialsteg an der anderen Seite des Radialsteges des mittleren Lagerrings zur Anlage, so dass sich der mittlere Lagerring mit dem äußeren Lagerring mitdreht. Nach einer weiteren Drehung um 360° kommt dann der Radialsteg des mittleren Lagerrings an der anderen Seite des Radialsteges des inneren Lagerrings zur Anlage, so dass eine Endstellung erreicht ist, in der eine weitere Drehbewegung des Wälzlagers nicht mehr möglich ist.

Mit einer solchen Drehwinkelbegrenzung ist zwar eine Verdrehung der Lagerringe gegeneinander bis zu 720° möglich, jedoch ist das Wälzlager aufgrund seiner notwendigen Ausbildung mit drei Lagerringen und der daraus resultierenden geringen Steifigkeit nicht für eine Drehverbindung geeignet.

### Aufgabe der Erfindung

Ausgehend von den Nachteilen des bekannten Standes der Technik liegt der Erfindung daher die Aufgabe zugrunde, ein für eine Drehverbindung geeignetes Wälzlager mit einer Drehwinkelbegrenzung zu entwickeln, die ein Verdrehen der Lagerringe gegeneinander über einen Winkel von 360° hinaus erlaubt.

### Beschreibung der Erfindung

Erfindungsgemäß wird diese Aufgabe bei einem Wälzlager nach dem Oberbegriff des Anspruchs 1 derart gelöst, dass das Anschlagmittel durch eine an der inneren Mantelfläche des äußeren Lagerrings in Umfangsrichtung verlaufende und an ihren beidseitigen Enden durch eine erste Anschlagnase begrenzte Freistellung, durch eine an der äußeren Mantelfläche des inneren Lagerrings in Umfangsrichtung verlaufende und an ihren beidseitigen Enden durch eine zweite Anschlagnase begrenzte Führungsnut sowie durch ein in der Führungsnut angeordnetes und aus einem Gleitschuh mit einem radial in die Freistellung hineinragenden Stift bestehendes Führungselement gebildet wird, das beide Lagerringe formschlüssig miteinander verbindet.

Der mit einer solchen Ausbildung des Wälzlagers mögliche Drehwinkel zwischen den Lagerringen setzt sich dabei aus einer Addition des Winkelbereiches der Freistellung im äußeren Lagerring mit dem Winkelbereich der Führungsnut im inneren Lagerring zusammen, so dass dieser maximal 720° abzüglich der Umfangsausdehnung beider Anschlagnasen erreichen kann. Bedingt durch die Anschlagnasen wird sich je nach deren Umfangsausdehnung ein Winkelbereich von etwa 15 - 690° abdecken lassen. Durch das in der Führungsnut und in der Freistellung angeordnete und aus einem Gleitschuh mit einem radial in die Freistellung hineinragenden Stift bestehende Führungselement ist ein formschlüssiger Zwangslauf beider Lagerringe zueinander realisiert, wobei der Drehwinkel zwischen den Lagerringen durch die räumliche Ausdehnung von Freistellung und Führungsnut in Umfangsrichtung bestimmt ist und jedem konkreten Einzelfall individuell anpassbar ist.

Nach dem zweiten unabhängigen Anspruch wird die Aufgabe der Erfindung auch dadurch gelöst, dass das Anschlagmittel durch eine an der äußeren Mantelfläche des Innerer Lagerring in Umfangsrichtung verlaufende und an ihren beidseitigen Enden durch eine erste Anschlagnase begrenzte Freistellung, durch eine an der inneren Mantelfläche des Äußerer Lagerrings in Umfangsrichtung verlaufende und an ihren beidseitigen Enden durch eine zweite Anschlagnase begrenzte Führungsnut sowie durch ein in der Führungsnut angeordnetes und aus einem Gleitschuh mit einem radial in die Freistellung hineinragenden Stift bestehendes Führungselement gebildet wird, das beide Lagerringe formschlüssig miteinander verbindet.

Weitere vorteilhafte Ausgestaltungen und Weiterbildungen der Erfindung sind in den Unteransprüchen 3 bis 9 beschrieben.

So sollen nach einem zusätzlichen Merkmal gemäß Anspruch 3 die Freistellung und die Führungsnut einen Winkelbereich kleiner 360° aufweisen. Durch die jeweilige Ausdehnung der Winkelbereiche lässt sich eine solche Drehverbindung auf den konkreten Einzelfall mit dem gewünschten Drehwinkel in einfacher Weise anpassen.

Nach einem anderen Merkmal gemäß Anspruch 4 ist vorgesehen, dass die Wälzkörper durch Lagernadeln zweier entgegen gerichteter Axialschrägnadellager mit Laufscheiben gebildet sind, wobei ein Schnittpunkt verlängerter Drehachsen der Lagernadeln im inneren Lagerring oder im äußeren Lagerring liegt. Gegenüber den bekannten Drehverbindungen, die in beschriebener Weise bevorzugt als Vierpunktlager oder Kreuzrollenlager ausgeführt sind, ist bei Verwendung von zwei Schrägnadellagern bei gleicher oder höherer Tragzahl die Fertigung wesentlich kostengünstiger realisierbar.

Nach einem weiteren Merkmal der Erfindung gemäß Anspruch 5 soll der äußere Lagerring an seiner inneren Mantelfläche einen in Richtung des inneren Lagerrings weisenden Vorsprung besitzen, der Anlageflächen für die Axialschrägnadellager bildet. Aufgrund dieser geometrischen Gestaltung lässt sich dieser äußere Lagerring in besonders einfacher und kostengünstiger Weise fertigen.

Nach einem anderen Merkmal gemäß Anspruch 6 soll der innere Lagerring an seiner äußeren Mantelfläche eine Ausnehmung zur Aufnahme der Axialschrägnadellager aufweisen, in die ein Gewindering einschraubbar ist. Durch diesen Gewindering kann in einfacher Art und Weise die gewünschte Vorspannung einer solchen Drehverbindung eingestellt werden.

Auch hat es sich nach Anspruch 7 als vorteilhaft erwiesen, dass die Lagerringe aus einem Leichtmetall, beispielsweise Aluminium, gefertigt sind. Dadurch ist sichergestellt, dass eine solche Wälzlager-Drehverbindung bei hoher Stabilität ein geringes Eigengewicht aufweist.

Nach einem zusätzlichen anderen Merkmal gemäß Anspruch 8 ist vorgesehen, dass der Stift des Gleitschuhs und/oder die Laufscheiben der Axialschrägnadellager einem Härteprozess unterworfen sind. Auf diese Weise wird die Lebensdauer der Wälzlager-Drehverbindung bei einer gleichzeitig vergrößerten Lastaufnahme erhöht.

Schließlich soll nach einem letzten Merkmal der Erfindung gemäß Anspruch 9 ein solches Wälzlager in einem Deckenstativ für medizinische Geräte einsetzbar sein.

### Kurze Beschreibung der Zeichnungen

Eine bevorzugte Ausführungsform des erfindungsgemäß ausgebildeten Wälzlagers wird nachfolgend unter Bezugnahme auf die beigefügten Zeichnungen näher erläutert. Dabei zeigen:
- Figur 1: eine perspektivische Darstellung einer erfindungsgemäß ausgebildeten Wälzlager-Drehverbindung;
- Figur 2: einen Längsschnitt durch die erfindungsgemäß ausgebildete Wälzlager-Drehverbindung nach Figur 1;
- Figur 3: eine perspektivische Darstellung des inneren Lagerrings der erfindungsgemäß ausgebildeten Wälzlager-Drehverbindung;
- Figur 4: eine perspektivische Darstellung des äußeren Lagerrings der erfindungsgemäß ausgebildeten Wälzlager-Drehverbindung.

### Ausführliche Beschreibung der Zeichnungen

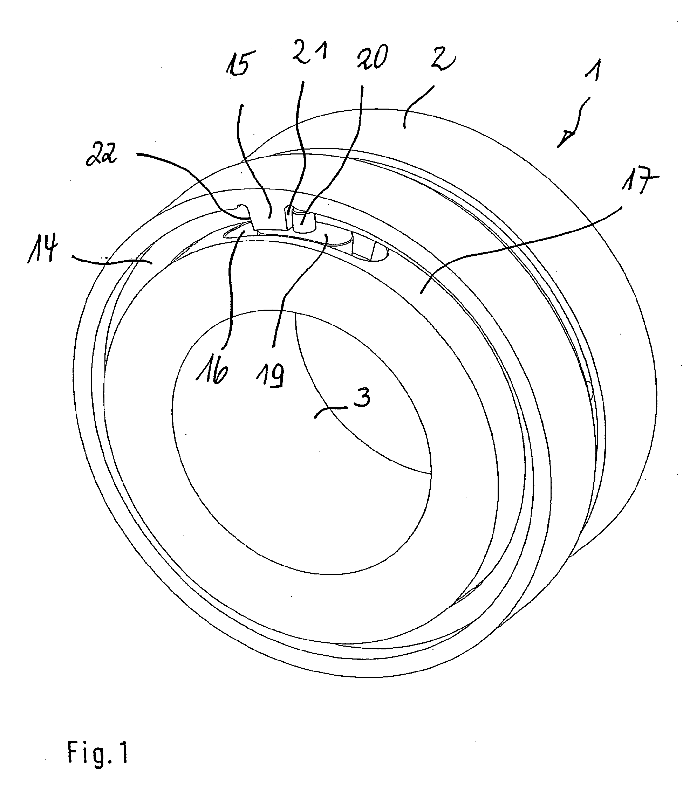

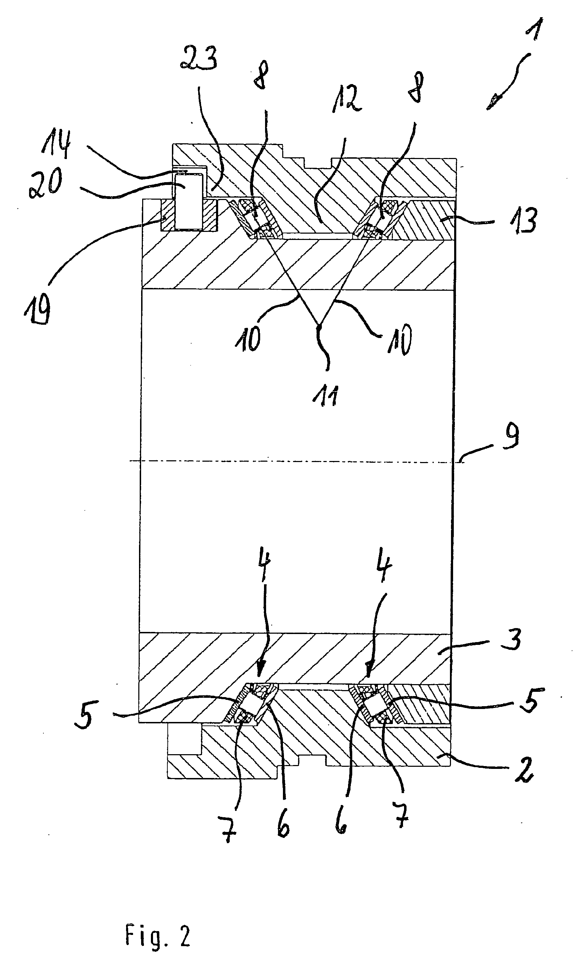

Die in den Figuren 1 und 2 dargestellte und mit 1 bezeichnete Drehverbindung entspricht der in Anspruch 1 beschriebenen Lösung und besteht aus dem äußeren Lagerring 2 und dem inneren Lagerring 3, zwischen denen zwei einander entgegengerichtete Axialschrägnadellager 4 angeordnet sind. Diese weisen je eine Laufscheibe 5, 6 auf, zwischen denen auf zugehörigen nicht näher bezeichneten Laufbahnen in je einem Käfig 7 geführte Lagernadeln 8 um die Lagerachse 9 abrollen. Im vorliegenden Ausführungsbeispiel sind die Axialschrägnadellager 4 so ausgerichtet, dass sich die verlängerten Drehachsen 10 der Lagernadeln 8 im inneren Lagerring 3 im Punkt 11 schneiden. Der äußere Lagerring 2 weist den V-förmigen Vorsprung 12 auf, der als Anlagefläche für die Laufscheiben 6 dient. Zur Drehverbindung 1 gehört weiter der Gewindering 13, der mit seinem nicht dargestellten Innengewinde auf den inneren Lagerring 3 aufschraubbar ist, so dass auf einfache Weise die beiden Axialschrägnadellager 4 unter Vorspannung gesetzt werden können. Es liegt auf der Hand, dass entsprechend dem Vorsprung 12 des äußeren Lagerringes 2 die nicht näher bezeichnete Ausnehmung 4 des inneren Lagerrings 3 zur Aufnahme der beiden Axialschrägnadellager 4 und des Gewinderinges 13 so ausgebildet werden muss, dass sie zueinander passen.

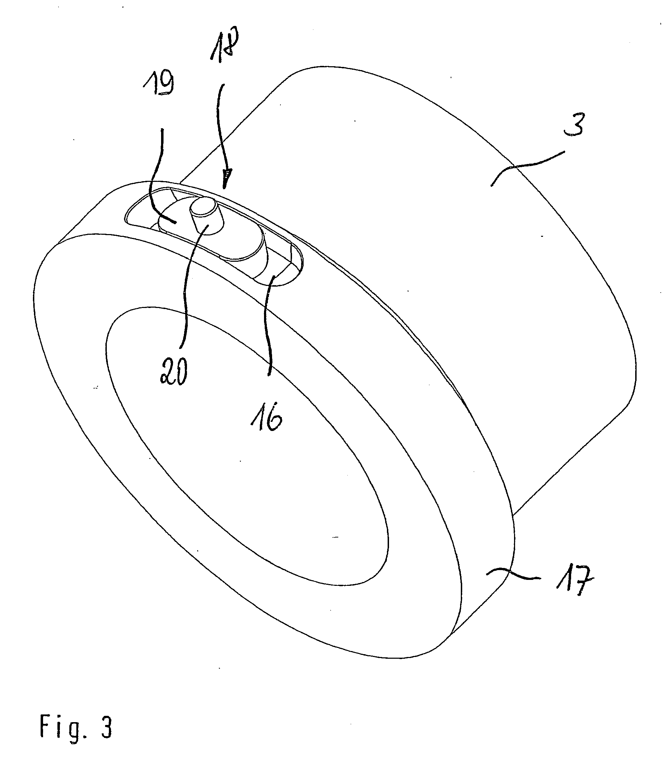

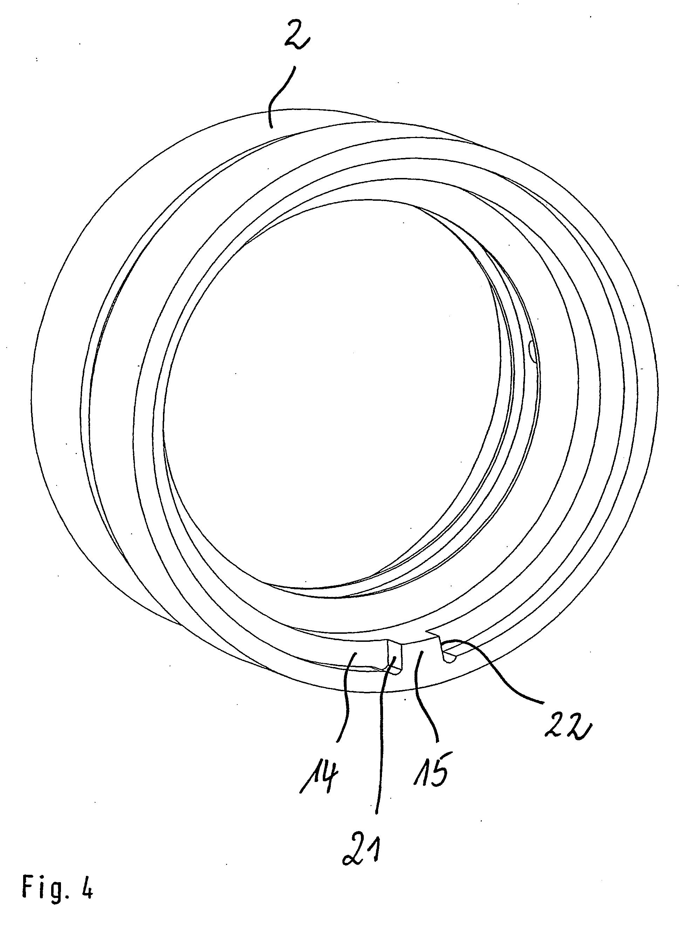

Wie aus den Figuren 1 bis 4 weiter ersichtlich, ist der äußere Lagerring 2 im linksseitigen Bereich an seiner inneren Mantelfläche mit der in Umfangsrichtung verlaufenden, kreisringartigen Freistellung 14 versehen, deren nicht bezeichnete beidseitige Enden durch die erste Anschlagnase 15 begrenzt sind. Diese kreisringartige Freistellung 14 ist in axialer Richtung nach außen offen. Zur Begrenzung des Drehwinkels der Drehverbindung 1 gehört auch die umlaufende Führungsnut 16, die an der äußeren Mantelfläche des inneren Lagerrings 3 angeordnet ist. Während sich im Ausführungsbeispiel die Freistellung 14 nahezu über den gesamten Umfang des äußeren Lagerringes 2 erstreckt, ist die Führungsnut 16 im inneren Lagerring 3 über den Umfang lediglich im Bereich eines spitzen Winkels ausgebildet, so dass die zweite Anschlagnase 17 sehr groß ausgebildet ist. Es versteht sich, dass ein maximaler Drehwinkel der Drehverbindung 1 sowohl durch eine maximale Ausdehnung der Freistellung 14 als auch durch eine maximale Ausdehnung der Führungsnut 16 in Umfangsrichtung realisiert ist.

Wie aus den genannten Figuren weiter erkennbar, besteht das mit 18 bezeichnete Führungselement aus dem Gleitschuh 19 und dem radial hervorstehenden Stift 20, wobei der Gleitschuh 19 in der Führungsnut 16 des inneren Lagerrings 3 angeordnet ist. Dabei ist der Gleitschuh 19 von der Schulter 23 des äußeren Lagerringes 2 teilweise überlappt, so dass das aus Gleitschuh 19 und Stift 20 bestehende Führungselement 18 verliersicher in der Führungsnut 16 gehalten ist. Der Stift 20 des Führungselementes 18 ragt dabei in die Freistellung 14 des äußeren Lagerringes 2 hinein. Wird nun der äußere Lagerring 2 als feststehend angesehen, so kann der innere Lagerring 3 zunächst soweit verdreht werden, dass der Stift 20 des Führungselementes 18 von der rechtsseitigen Anlagefläche 21 der Haltenase 15 zur linksseitigen Anlagefläche 22 bewegt wird. Danach kann die Drehung solange fortgesetzt werden, bis der Gleitschuh 19 an einem Ende der Führungsnut 16 zur Anlage gelangt.

Auf die zeichnerische Darstellung der im nebengeordneten Anspruch 2 beschriebenen Lösungsvariante ist an dieser Stelle aus Vereinfachungsgründen bewusst verzichtet worden. Der wesentliche Unterschied liegt in Umkehrung der Anordnung von Freistellung 14 und Führungsnut 16. Nach den Anspruchsmerkmalen von Anspruch 2 ist die Freistellung 14 nicht am äußeren Lagerring 2, sondern am inneren Lagerring 3 und die Führungsnut 16 nicht am inneren Lagerring 3, sondern am äußeren Lagerring 2 angeordnet.

### Bezugszeichenliste

- 1: Drehverbindung
- 2: Äußerer Lagerring
- 3: Innerer Lagerring
- 4: Axialschrägnadellager
- 5: Laufscheibe
- 6: Laufscheibe
- 7: Käfig
- 8: Lagernadel
- 9: Lagerachse
- 10: Drehachse
- 11: Schnittpunkt
- 12: Vorsprung
- 13: Gewindering
- 14: Freistellung
- 15: erste Anschlagnase
- 16: Führungsnut
- 17: zweite Anschlagnase
- 18: Führungselement
- 19: Gleitschuh
- 20: Stift
- 21: Anlagefläche
- 22: Anlagefläche
- 23: Schulter

## Patentansprüche

1. Wälzlager, insbesondere Drehverbindung (1), mit zumindest einem äußeren Lagerring (2) und einem inneren Lagerring (3), zwischen denen eine Vielzahl von Wälzkörpern abrollen, wobei innerhalb des Wälzlagers ein Anschlagmittel zur Begrenzung von dessen Drehwinkel angeordnet ist, **dadurch gekennzeichnet, dass** das Anschlagmittel durch eine an der inneren Mantelfläche des äußeren Lagerrings (2) in Umfangsrichtung verlaufende und an ihren beidseitigen Enden durch eine erste Anschlagnase (15) begrenzte Freistellung (14), durch eine an der äußeren Mantelfläche des inneren Lagerrings (3) in Umfangsrichtung verlaufende und an ihren beidseitigen Enden durch eine zweite Anschlagnase (17) begrenzte Führungsnut (16) sowie durch ein in der Führungsnut (16) angeordnetes und aus einem Gleitschuh (19) mit einem radial in die Freistellung (14) hineinragenden Stift (20) bestehendes Führungselement (18) gebildet wird, das beide Lagerringe (2, 3) formschlüssig miteinander verbindet.

2. Wälzlager nach dem Oberbegriff von Anspruch 1, **dadurch gekennzeichnet, dass** das Anschlagmittel durch eine an der äußeren Mantelfläche des inneren Lagerring (3) in Umfangsrichtung verlaufende und an ihren beidseitigen Enden durch eine erste Anschlagnase (15) begrenzte Freistellung (14), durch eine an der inneren Mantelfläche des äußeren Lagerrings (2) in Umfangsrichtung verlaufende und an ihren beidseitigen Enden durch eine zweite Anschlagnase (17) begrenzte Führungsnut (16) sowie durch ein in der Führungsnut (16) angeordnetes und aus einem Gleitschuh (19) mit einem radial in die Freistellung (14) hineinragenden Stift (20) bestehendes Führungselement (18) gebildet wird, das beide Lagerringe (2, 3) formschlüssig miteinander verbindet.

3. Wälzlager nach Anspruch 1 oder 2, **dadurch gekennzeichnet, dass** die Freistellung (14) und die Führungsnut (16) einen Winkelbereich < 360 ° aufweisen.

4. Wälzlager nach Anspruch 1 oder 2, **dadurch gekennzeichnet, dass** die Wälzkörper durch Lagernadeln (8) zweier entgegengerichteter Axialschrägnadellager (4) gebildet sind, die Laufscheiben (5, 6) aufweisen, wobei ein Schnittpunkt (11) verlängerter Drehachsen (10) der Lagernadeln (8) im äußeren Lagerring (2) oder im inneren Lagerring (3) liegt.

5. Wälzlager nach Anspruch 4, **dadurch gekennzeichnet, dass** der äußere Lagerring (2) an seiner inneren Mantelfläche einen in Richtung des inneren Lagerrings (3) weisenden Vorsprung (12) besitzt, der Anlageflächen für die Axialschrägnadellager (4) bildet.

6. Wälzlager nach Anspruch 4, **dadurch gekennzeichnet, dass** der Lagerinnenring (3) an seiner äußeren Mantelfläche eine Ausnehmung zur Aufnahme der Axialschrägnadellager (4) aufweist, in die ein Gewindering (13) einschraubbar ist.

7. Wälzlager nach Anspruch 1 oder 2, **dadurch gekennzeichnet, dass** die Lagerringe (2, 3) aus einem Leichtmetall gefertigt sind.

8. Wälzlager nach Anspruch 1 2 oder 4, **dadurch gekennzeichnet, dass** der Stift (20) des Gleitschuhs (19) und/oder die Laufscheiben (5, 6) der Axialschrägnadellager (4) einem Härteprozess unterworfen sind.

9. Wälzlager nach Anspruch 1 oder 2, **dadurch gekennzeichnet, dass** es in einem Deckenstativ für medizinische Geräte einsetzbar ist.

## Claims

1. Anti-friction bearing, in particular rotary connection (1), having at least one outer bearing ring (2) and one inner bearing ring (3), between which a multiplicity of rolling bodies roll, a stop means being arranged within the anti-friction bearing in order to limit the rotational angle of the latter, **characterized in that** the stop means is formed by a clearance (14) which extends in the circumferential direction on the inner circumferential face of the outer bearing ring (2) and is delimited at its ends on both sides by a first stop lug (15), by a guide groove (16) which extends in the circumferential direction on the outer circumferential face of the inner bearing ring (3) and is delimited at its ends on both sides by a second stop lug (17), and by a guide element (18) which is arranged in the guide groove (16), consists of a sliding pad (19) with a pin (20) which protrudes radially into the clearance (14), and connects both bearing rings (2, 3) to one another positively.

2. Anti-friction bearing according to the precharacterizing clause of Claim 1, **characterized in that** the stop means is formed by a clearance (14) which extends in the circumferential direction on the outer circumferential face of the inner bearing ring (3) and is delimited at its ends on both sides by a first stop lug (15), by a guide groove (16) which extends in the circumferential direction on the inner circumferential face of the outer bearing ring (2) and is delimited at its ends on both sides by a second stop lug (17), and by a guide element (18) which is arranged in the guide groove (16), consists of a sliding pad (19) with a pin (20) which protrudes radially into the clearance (14), and connects both bearing rings (2, 3) to one another positively.

3. Anti-friction bearing according to Claim 1 or 2, **characterized in that** the clearance (14) and the guide groove (16) have an angular range of < 360°.

4. Anti-friction bearing according to Claim 1 or 2, **characterized in that** the rolling bodies are formed by bearing needles (8) of two axial angular-contact needle bearings (4) which are oriented in opposite directions and have runner plates (5, 6), an intersection point (11) of extended rotational axes (10) of the bearing needles (8) lying in the outer bearing ring (2) or in the inner bearing ring (3).

5. Anti-friction bearing according to Claim 4, **characterized in that**, on its inner circumferential face, the outer bearing ring (2) has a projection (12) which points in the direction of the inner bearing ring (3) and forms bearing faces for the axial angular-contact needle bearings (4).

6. Anti-friction bearing according to Claim 4, **characterized in that**, on its outer circumferential face, the bearing inner ring (3) has a recess for receiving the axial angular-contact needle bearings (4), into which recess a threaded ring (13) can be screwed.

7. Anti-friction bearing according to Claim 1 or 2, **characterized in that** the bearing rings (2, 3) are manufactured from a light alloy.

8. Anti-friction bearing according to Claim 1, 2 or 4, **characterized in that** the pin (20) of the sliding pad (19) and/or the runner plates (5, 6) of the axial angular-contact needle bearings (4) are/is subjected to a hardening process.

9. Anti-friction bearing according to Claim 1 or 2, **characterized in that** it can be used in a ceiling stand for medical equipment.

## Revendications

1. Palier à rouleaux, notamment liaison pivotante (1), avec au moins une bague de palier extérieure (2) et une bague de palier intérieure (3), entre lesquelles roule une pluralité de corps de rouleau, un moyen de butée étant disposé à l'intérieur du palier à rouleaux pour limiter son angle de rotation, **caractérisé en ce que** le moyen de butée est formé par un dégagement (14) s'étendant dans la direction circonférentielle au niveau de la surface d'enveloppe intérieure de la bague de palier extérieure (2) et délimité par un premier bec de butée (15) au niveau de ses deux extrémités latérales, ainsi que par une rainure de guidage (16) s'étendant dans la direction circonférentielle au niveau de la surface d'enveloppe extérieure de la bague de palier intérieure (3) et délimitée par un deuxième bec de butée (17) au niveau de ses deux extrémités latérales et formé par un élément de guidage (18) disposé dans la rainure de guidage (16) et composé d'un patin glissant (19) pourvu d'une tige (20) saillant vers l'intérieur dans le plan radial dans le dégagement (14), ledit élément de guidage reliant entre elles les deux bagues de palier (2, 3) par complémentarité de formes.

2. Palier à rouleaux selon le préambule de la revendication 1, **caractérisé en ce que** le moyen de butée est formé par un dégagement (14) s'étendant dans la direction circonférentielle au niveau de la surface d'enveloppe extérieure de la bague de palier intérieure (3) et délimité par un premier bec de butée (15) au niveau de ses deux extrémités latérales, ainsi que par une rainure de guidage (16) s'étendant dans la direction circonférentielle au niveau de la surface d'enveloppe intérieure de la bague de palier extérieure (2) et délimitée par un deuxième bec de butée (17) au niveau de ses deux extrémités latérales et formé par un élément de guidage (18) disposé dans la rainure de guidage (16) et composé d'un patin glissant (19) pourvu d'une tige (20) saillant vers l'intérieur dans le plan radial dans le dégagement (14), ledit élément reliant entre elles les deux bagues de palier (2, 3) par complémentarité de formes.

3. Palier à rouleaux selon la revendication 1 ou 2, **caractérisé en ce que** le dégagement (14) et la rainure de guidage (16) présentent une plage angulaire < 360 °.

4. Palier à rouleaux selon la revendication 1 ou 2, **caractérisé en ce que** les corps de rouleau sont formés par des aiguilles de palier (8) de deux paliers d'aiguille (4) obliques dans le plan axial opposés comportant des disques de roulement (5, 6), un point d'intersection (11) des axes de rotation (10) rallongés des aiguilles de palier (8) reposant dans la bague de palier extérieure (2) ou dans la bague de palier intérieure (3).

5. Palier à rouleaux selon la revendication 4, **caractérisé en ce que** la bague de palier extérieure (2) possède au niveau de sa surface d'enveloppe intérieure une saillie (12) orientée en direction de la bague de palier intérieure (3) formant des surfaces d'appui pour les paliers d'aiguille (4) obliques dans le plan axial.

6. Palier à rouleaux selon la revendication 4, **caractérisé en ce que** la bague de palier intérieure (3) comporte au niveau de sa surface d'enveloppe extérieure un évidement servant à recevoir les paliers d'aiguille (4) obliques dans le plan axial dans lesquels une bague filetée (13) peut être vissée.

7. Palier à rouleaux selon la revendication 1 ou 2, **caractérisé en ce que** les bagues de palier (2, 3) sont fabriquées en métal léger.

8. Palier à rouleaux selon la revendication 1, 2 ou 4, **caractérisé en ce que** la tige (20) du patin glissant (19) et/ou les disques de roulement (5, 6) des paliers d'aiguille (4) obliques dans le plan axial sont soumis à un processus de durcissement.

9. Palier à rouleaux selon la revendication 1 ou 2, **caractérisé en ce qu'**il peut être utilisé dans un pied de couvercle pour appareils médicaux.
